# EUROPEAN PATENT APPLICATION

(11) **EP 4 571 969 A1**
(43) Date of publication of application: **18.06.2025**
(21) Application number: 22955935.6
(22) Date of filing: 22.08.2022
(51) Int. Cl.: H01M 50/209

(54) **BATTERY CELL, BATTERY AND ELECTRIC DEVICE**

(71) Applicant: Contemporary Amperex Technology Co., Limited, Ningde, Fujian 352100 (CN)
(72) Inventor: CHEN, Long, Ningde, Fujian 352100 (CN); LIN, Denghua, Ningde, Fujian 352100 (CN); HUANG, Shoujun, Ningde, Fujian 352100 (CN); CHEN, Xinxiang, Ningde, Fujian 352100 (CN); ZHENG, Yulian, Ningde, Fujian 352100 (CN); CHENG, Qi, Ningde, Fujian 352100 (CN); LEI, Yuyong, Ningde, Fujian 352100 (CN); WANG, Peng, Ningde, Fujian 352100 (CN); JIN, Haizu, Ningde, Fujian 352100 (CN)
(74) Representative: Ziebig Hengelhaupt Intellectual Property Attorneys Patentanwaltskanzlei PartGmbB
(86) International application number: PCT/CN2022/113923
(87) International publication number: WO 2024/040384

(57) **Abstract**

Embodiments of the present application provide a battery, a battery and an electric apparatus. The battery cell comprises a first case, a first electrode assembly, a second case, a second electrode assembly, and an end cover assembly. The first case is provided with a first opening. The first electrode assembly is accommodated within the first case. The second case is provided with a second opening opposite the first opening. The second electrode assembly is accommodated within the second case. The end cover assembly is configured to cover the first opening and the second opening, the end cover assembly includes a connecting assembly, and the connecting assembly is configured to electrically connect the first electrode assembly and the second electrode assembly. The first case and the second case, which are sequentially arranged, can increase the overall size of the battery cell, thereby increasing the space utilization of the battery cell in the battery, and improving the energy density.

## Description

### TECHNICAL FIELD

The present application relates to the technical field of batteries, and more specifically relates to a battery cell, a battery and an electric apparatus.

### BACKGROUND

Battery cells are widely used in electronic devices, such as mobile phones, laptops, electromobiles, electric cars, electric airplanes, electric ships, electric toy cars, electric toy ships, electric toy airplanes, and power tools.

In the development of battery technology, how to improve energy density is a research direction in battery technology.

### SUMMARY OF THE INVENTION

The present application provides a battery, a battery and an electric apparatus, which can improve the energy density.

In a first aspect, some embodiments of the present application provide a battery cell, which includes a first case, a first electrode assembly, a second case, a second electrode assembly and an end cover assembly. The first case is provided with a first opening. The first electrode assembly is accommodated within the first case. The second case is provided with a second opening opposite the first opening. The second electrode assembly is accommodated within the second case. The end cover assembly is configured to cover the first opening and the second opening, the end cover assembly includes a connecting assembly, and the connecting assembly is configured to electrically connect the first electrode assembly and the second electrode assembly.

In the above technical solution, the first case and the second case, which are sequentially arranged, can increase the overall size of the battery cell, thereby increasing the space utilization of the battery cell in the battery, and improving the energy density. The first electrode assembly and the second electrode assembly are respectively accommodated within the first case and the second case, thus the size of a single electrode assembly and the size of a single case can be reduced, the molding process of the case and the electrode assembly is simplified, the internal resistance of the electrode assembly and the difficulty of the electrolyte infiltrating into the electrode assembly are reduced, the cycle performance of the battery cell is improved, and the service life of the battery cell is prolonged. The end cover assembly can cover the first opening and the second opening at the same time and realize the sealing of the battery cell, so that the structure of the battery cell is simplified. The connecting assembly can electrically connect the first electrode assembly and the second electrode assembly to realize the convergence and output of current, and the structure of the battery cell is simplified.

In some embodiments, the battery cell further includes an insulating component, and the insulating component clads at least part of the first case and at least part of the second case.

In the above technical solution, the insulating component can protect the first case and the second case from outer sides, thus improving the insulativity of the battery cell and reducing the risk of short circuit.

In some embodiments, the insulating component completely covers an outer peripheral surface of the first case and an outer peripheral surface of the second case.

In the above technical solution, the insulating component completely covers the outer peripheral surface of the first case and the outer peripheral surface of the second case to reduce the exposed area of the first case and the exposed area of the second case, thereby reducing the risk of conduction between the first case and other electrified components and the risk of conduction between the second case and other conductive components, and improving the safety.

In some embodiments, at least part of the end cover assembly is located between the first opening and the second opening. A part of the insulating component surrounds the outer side of the part, located between the first opening and the second opening, of the end cover assembly.

In the above technical solution, the insulating component can shield the part, located between the first opening and the second opening, of the end cover assembly to reduce the risk of conduction between the end cover assembly and other electrified parts and improve the safety.

In some embodiments, the end cover assembly includes a first end cover and a second end cover, the first end cover is configured to cover the first opening, and the second end cover is located on the side of the first end cover facing the second case and configured to cover the second opening. The connecting assembly connects the first end cover and the second end cover.

In the above technical solution, the first end cover and the second end cover are respectively connected to the first case and the second case, thus the installation difficulty of the end cover assembly on the first case and the second case can be reduced, the stability of the end cover assembly is improved, and the sealing performance of the battery cell is improved. The first end cover and the second end cover can fix the connecting assembly, so that the shaking of the connecting assembly is reduced when the battery cell vibrates, the risk of connection failure of the connecting assembly and the first electrode assembly and the risk of connection failure of the connecting assembly and the second electrode assembly are reduced, and the reliability of the battery cell is improved.

In some embodiments, the insulating component surrounds the part, located between the first case and the second case, of the first end cover and the part, located between the first case and the second case, of the second end cover from the outer periphery.

In the above technical solution, the insulating component can shield the first end cover and the second end cover, so that the exposure of the first end cover and the exposure of the second end cover are reduced, the risk of short circuit is reduced, and the safety is improved.

In some embodiments, the insulating component is attached to the part, located between the first case and the second case, of the first end cover and the part, located between the first case and the second case, of the second end cover.

In the above technical solution, the insulating component is attached to the first end cover and the second end cover, thus the risk of deformation and deviation of the insulating component is reduced when the battery cell is subjected to external impact, the insulating component can effectively shield the first end cover and the second end cover, the risk of short circuit is reduced, and the safety is improved.

In some embodiments, the end cover assembly further includes an insulating plate, and the insulating plate is arranged between the first end cover and the second end cover. The insulating component surrounds at least part of the insulating plate from the outer periphery.

In the above technical solution, the insulating plate can insulate and isolate the first end cover from the second end cover, so as to reduce the risk of short circuit and improve the safety. The insulating component can be matched with the insulating plate to shield the first end cover and the second end cover, thus reducing the exposure of the first end cover and the exposure of the second end cover.

In some embodiments, the insulating component is attached to the outer peripheral surface of the insulating plate.

In the above technical solution, the insulating component is attached to the outer peripheral surface of the insulating plate, thus the risk of deformation and deviation of the insulating component is reduced when the battery cell is subjected to external impact, the risk of exposing the first end cover and the risk of exposing the second end cover are reduced, and the safety is improved.

In some embodiments, the first case and the second case are arranged in a first direction. The insulating component includes a first insulating part and a second insulating part which are arranged at an interval in the first direction, the first insulating part is connected to the first case, and the second insulating part is connected to the second case. The end of the first insulating part close to the second insulating part exceeds the first end cover in the first direction and is connected to the insulating plate, and the end of the second insulating part close to the first insulating part exceeds the second end cover in the first direction and is connected to the insulating plate.

In the above technical solution, the first insulating part covers the first end cover from the outer side so as to reduce the risk of exposing the first end cover; and the second insulating part covers the second end cover from the outer side so as to reduce the risk of exposing the second end cover. The first insulating part and the second insulating part are both connected to the insulating plate, so that the offset of the first insulating part and the second insulating part is reduced when the battery cell is subjected to external impact, the risk of exposing the first end cover and the risk of exposing the second end cover are reduced, and the safety is improved. The first insulating part and the second insulating part are separately arranged so as to reduce the interference of the two parts in the assembling process.

In some embodiments, the end of the first insulating part close to the second insulating part exceeds the first end cover in the first direction by the size U1, U1≥0.01mm.

In the above technical solution, U1 is set to be greater than or equal to 0.01 mm, so that the connecting area between the first insulating part and the insulating plate can meet the requirement, and the risk of separation of the first insulating part from the insulating plate is reduced.

In some embodiments, the end of the second insulating part close to the first insulating part exceeds the second end cover in the first direction by the size U2, U2≥0.01mm.

In the above technical solution, U2 is set to be greater than or equal to 0.01 mm, so that the connecting area between the second insulating part and the insulating plate can meet the requirement, and the risk of separation of the second insulating part from the insulating plate is reduced.

In some embodiments, the end cover assembly further includes a conductive member electrically connected to the connecting assembly, and the insulating plate clads at least part of the conductive member so as to insulate and isolate the conductive member from the first end cover and the second end cover. An avoidance gap is formed between the first insulating part and the second insulating part and is configured to expose at least part of the conductive member.

In the above technical solution, the avoidance gap can expose at least part of the conductive member, so that other components can pass through the insulating component and be electrically connected to the conductive member, thereby detecting the potential of the connecting assembly.

In some embodiments, the end cover assembly further includes a conductive member electrically connected to the connecting assembly, and at least part of the conductive member is located between the first opening and the second opening. The insulating component is provided with an avoidance structure, and the avoidance structure is configured to expose at least part of the conductive member.

In the above technical solution, the avoidance structure can expose at least part of the conductive member, so that other components can pass through the insulating component and be electrically connected to the conductive member, thereby detecting the potential of the connecting assembly.

In some embodiments, the first case and the second case are arranged in the first direction. The size of the part, exposed through the avoidance structure, of the conductive member in the first direction is L1, L1≥0.01mm.

In the above technical solution, L1 is limited to be greater than or equal to 0.01 mm, so that the contact size of a probe passing through the avoidance structure and the conductive member in the first direction meets the detection requirement.

In some embodiments, the avoidance structure includes an avoidance hole, and the avoidance hole is arranged opposite the conductive member in the axial direction of the avoidance hole, so that at least part of the conductive member is exposed.

In the above technical solution, the avoidance hole can expose at least part of the conductive member, so that other components can pass through the insulating component and be electrically connected to the conductive member, thereby detecting the potential of the connecting assembly. The avoidance hole is simple in molding mode and small in size, and can effectively reduce the risk of insulation failure.

In some embodiments, the size of the part, exposed through the avoidance hole, of the conductive member in a second direction is L2, L2≥0.01mm. The first direction, the second direction and the axial direction are perpendicular to each other.

In the above technical solution, L2 is defined to be greater than or equal to 0.01mm, so that the contact size of the probe passing through the avoidance hole and the conductive member in the second direction meets the detection requirements.

In some embodiments, the size of the battery cell in the axial direction is greater than the size of the battery cell in the second direction.

In the battery, a plurality of battery cells can be arranged in the second direction. **In** the above technical solution, the avoidance hole is arranged in the side of the battery cell in the axial direction, so that the risk that the avoidance hole of a certain battery cell is shielded by an adjacent battery cell can be reduced.

In some embodiments, the avoidance structure includes the avoidance gap, and the avoidance gap surrounds the end cover assembly all around. The avoidance gap surrounds the end cover assembly all around, so that the exposed position of the conductive member can be flexibly set.

In some embodiments, the battery cell further includes a first electrode terminal and a second electrode terminal, the first electrode terminal is located on the side of the first electrode assembly facing away from the first opening and is electrically connected to the first electrode assembly, and the second electrode terminal is located on the side of the second electrode assembly facing away from the second opening and is electrically connected to the second electrode assembly.

In the above technical solution, the first electrode terminal and the second electrode terminal are configured to electrically connect the first electrode assembly and the second electrode assembly to an external circuit, so that charging and discharging of the electrode assemblies are achieved. The first electrode terminal and the second electrode terminal are arranged at two opposite ends of the battery cell respectively, so that series-parallel connection among a plurality of battery cells is achieved.

In a second aspect, some embodiments of the present application provide a battery which includes the plurality of battery cells provided by any embodiment in the first aspect.

In a third aspect, some embodiments of the present application provide an electric apparatus which includes the battery cell provided by any embodiment of the first aspect, and the battery cell is configured to provide electric energy.

### DESCRIPTION OF DRAWINGS

In order to illustrate the technical solutions of the embodiments of the present application more clearly, the drawings required in the embodiments of the present application are briefly introduced below. Obviously, the drawings described below are only some embodiments of the present application. For those of ordinary skill in the art, other drawings can also be obtained according to the drawings without any creative efforts.
Fig. 1 is a schematic structural diagram of a vehicle according to some embodiments of the present application;
FIG. 2 is an exploded schematic diagram of a battery provided by some embodiments of the present application;
FIG. 3 is a three-dimensional structural schematic diagram of a battery cell provided by some embodiments of the present application;
FIG. 4 is an exploded schematic diagram of a battery cell shown in FIG. 3;
FIG. 5 is a side-view schematic diagram of a battery cell shown in FIG. 3;
FIG. 6 is a cross-sectional schematic diagram of a battery cell along a line A-A shown in FIG. 5;
FIG. 7 is an enlarged schematic diagram of a round frame C in FIG. 6;
FIG. 8 is an enlarged schematic diagram of a round frame B of a battery cell shown in FIG. 5;
FIG. 9 is an overlook schematic diagram of an end cover assembly of a battery cell provided by some embodiments of the present application;
FIG. 10 is a cross-sectional schematic diagram of a line D-D in FIG. 9;
FIG. 11 is an exploded schematic diagram of an end cover assembly shown in FIG. 9;
FIG. 12 is a front-view schematic diagram of a battery cell provided by some other embodiments of the present application;
FIG. 13 is an enlarged schematic diagram of a round frame E in FIG. 12;
FIG. 14 is a three-dimensional structural schematic diagram of a battery cell provided by some other embodiments of the present application;
FIG. 15 is an enlarged schematic diagram of a round frame F in FIG. 14;
FIG. 16 is a section-view schematic diagram of a battery cell shown in FIG. 14; and
FIG. 17 is an enlarged schematic representation of a round frame G in FIG. 16.
The accompanying drawings are not drawn to actual scale.

### DETAILED DESCRIPTION

In order to make the objects, technical solutions and advantages of embodiments of the present application clearer, the technical solutions in the embodiments of the present application will be clearly described below with reference to the drawings for the embodiments of the present application. Apparently, the described embodiments are some of, rather than all of, the embodiments of the present application. All the other embodiments obtained by a person of ordinary skill in the art based on the embodiments of the present application without any creative effort shall fall within the scope of protection of the present application.

Unless otherwise defined, all technical and scientific terms used in the present application have the same meanings as generally understood by those skilled in the technical art of the present application; the terms used in the description of the present application are for the purpose of describing specific embodiments only and are not intended to limit the present application; the terms "include" and "have" in the description and claims of the present application and in the description of the above accompanying drawings and any variation thereof are intended to cover the non-exclusive inclusion. The terms "first", "second", etc. in the specification and the claims of the present application as well as the above drawings are used to distinguish different objects, rather than to describe a specific order or primary-secondary relationship.

The phrase "embodiment" referred to in the present application means that the descriptions of specific features, structures, and characteristics in combination with the embodiment are included in at least one embodiment of the present application. The appearance of this phrase in various places in the specification does not necessarily refer to the same embodiment, nor is it a separate or alternative embodiment that is mutually exclusive with other embodiments.

In the description of the present application, it should be noted that the terms "mounting", "connecting", "connection" and "attachment" should be understood in a broad sense, unless otherwise explicitly specified or defined, for example, it may be a fixed connection, a detachable connection or an integrated connection; and may be a direct connection or an indirect connection through an intermediate medium, or may be a communication between the interior of two elements. For those of ordinary skill in the art, the specific meanings of the above terms in the present application can be understood according to specific situations.

In the present application, the term "and/or" is only an association relation describing associated objects, which means that there may be three relations, for example, A and/or B may represent three situations: A exists alone, both A and B exist, and B exists alone. In addition, the character "/" in the present application generally means that the associated objects before and after it are in an "or" relationship.

In the embodiments of the present application, the same reference signs denote the same components, and for the sake of brevity, detailed descriptions of the same components are omitted in different embodiments. It should be understood that the thickness, length, width and other dimensions of the various components in the embodiments of the present application shown in the drawings, as well as the overall thickness, length, width and other dimensions of an integrated apparatus, are for illustrative purposes only, and should not constitute any limitation to the present application.

"A plurality of" appearing in the present application means two or more (including two).

In the present application, the term "parallel" includes not only absolute parallel situations, but also generally parallel situations of conventional cognition in engineering; at the same time, the term "vertical" includes not only absolute vertical situations, but also generally vertical situations of conventional cognition in engineering.

In the present application, a battery cell may include a lithium-ion battery cell, a lithium-sulfur battery cell, a sodium lithium-ion battery cell, a sodium-ion battery cell or a magnesium-ion battery cell, etc., which is not limited in the embodiment of the present application.

The battery mentioned in the embodiments of the present application refers to a single physical module including a plurality of battery cells to provide higher voltage and capacity. The battery may generally include a box for packaging one or more battery cells. The box can avoid liquids or other foreign objects affecting the charging or discharging of the battery cell.

The battery cell includes an electrode assembly and an electrolyte; and the electrode assembly includes a positive electrode plate, a negative electrode plate and an insulation film. The battery cell mainly works by means of movement of metal ions between the positive electrode plate and the negative electrode plate. The positive electrode plate includes a positive electrode current collector and a positive electrode active material layer, and the positive electrode active material layer coats a surface of the positive electrode current collector; and the positive electrode current collector includes a positive electrode current collecting part and a positive tab, the positive electrode current collecting part is coated with the positive electrode active material layer, and the positive tab is not coated with the positive electrode active material layer. By taking a lithium-ion battery as an example, the material of the positive electrode current collector may be aluminum, the positive electrode active material layer includes a positive electrode active material, and the positive electrode active material may be lithium cobalt oxide, lithium iron phosphate, ternary lithium or lithium manganate and the like. The negative electrode plate includes a negative electrode current collector and a negative electrode active material layer, and the negative electrode active material layer coats the surface of the negative electrode current collector; the negative electrode current collector includes a negative electrode current collecting part and a negative tab, the negative electrode current collecting part is coated with the negative electrode active material layer, and the negative tab is not coated with the negative electrode active material layer. The material of the negative electrode current collector may be copper, the negative electrode active material layer includes a negative electrode active material, and the negative electrode active material may be carbon or silicon and the like. The material of the insulation film may be **PP** (polypropylene) or PE (polyethylene) and the like.

The battery cell further includes a case, the case is provided with an accommodating cavity, and an electrode assembly and an electrolyte are accommodated within the accommodating cavity. The case can protect the electrode assembly and reduce the risk that other foreign matters affect the electrode assembly.

With the development of battery technology, users have an increasing demand for battery capacity. For example, with the increasing popularity of new energy vehicles, the requirements for batteries in the new energy vehicles are increased. With the continuous increase of user requirements for the mileage of the new energy vehicles, it is needed to continuously improve the capacity of the batteries used in new energy vehicles; and moreover, during the use of the battery, the internal friction and heat generated due to internal resistance are required to be minimized.

Generally, the battery includes a box and a plurality of battery cells accommodated within the box. The box is usually provided with a fixing structure for supporting and fixing the battery cells. For the battery, on the premise that the battery capacity is certain, the smaller the size of the battery cells is, the larger the number of the battery cells is, and the box needs to be provided with more fixing structures to fix the battery cells, consequently, the utilization of the space inside the battery is low, and the energy density of the battery cannot meet the requirement.

In order to simplify the structure of the battery and improve the energy density of the battery, the inventor tried to increase the size of a single battery cell to reduce the number of battery cells in the battery, simplify the fixed structure in the box, and improve the utilization of the space inside the battery.

In order to adapt to the size of the battery cell, it is necessary to adaptively increase the size of the case and the size of the electrode assembly. The inventor noted that as the size of the case increases, the difficulty of manufacturing a case gradually increases, and the risk of defects in the case gradually increases. Large-sized electrode assemblies have a long conductive path and large internal resistance, resulting in a low power of the battery cell. The large size of the electrode assembly will also increase the difficulty of the electrolyte infiltrating into the electrode assembly, which will affect the cycling performance and service life of the battery cell.

In view of the above, some embodiments of the present application provide a technical solution. In the technical solution, the battery cell includes a first case, a first electrode assembly, a second case, a second electrode assembly and an end cover assembly. The first case is provided with a first opening. The first electrode assembly is accommodated within the first case. The second case is provided with a second opening opposite the first opening. The second electrode assembly is accommodated within the second case. The end cover assembly is configured to cover the first opening and the second opening, the end cover assembly includes a connecting assembly, and the connecting assembly is configured to electrically connect the first electrode assembly and the second electrode assembly.

In the above technical solution, the first case and the second case, which are sequentially arranged, can increase the overall size of the battery cell, thereby increasing the space utilization of the battery cell in the battery, and improving the energy density. The first electrode assembly and the second electrode assembly are respectively accommodated within the first case and the second case, thus the size of a single electrode assembly and the size of a single case can be reduced, the molding process of the case and the electrode assembly is simplified, the internal resistance of the electrode assembly and the difficulty of the electrolyte infiltrating into the electrode assembly are reduced, the cycle performance of the battery cell is improved, and the service life of the battery cell is prolonged. The end cover assembly can cover the first opening and the second opening at the same time and realize the sealing of the battery cell, so that the structure of the battery cell is simplified. The connecting assembly can electrically connect the first electrode assembly and the second electrode assembly to realize the convergence and output of current, and the output structure of the battery cell is simplified.

The technical solution described by the embodiments of the present application is suitable for a battery and an electric apparatus using the battery.

The electric apparatus can be vehicles, mobile phones, portable devices, laptops, ships, spacecraft, electric toys, power tools, and the like. The vehicle may be a fuel vehicle, a gas vehicle, or a new energy vehicle. The new energy vehicle may be an all-electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, and an electric aircraft toy. The electric tool includes a metal cutting electric tool, a grinding electric tool, an assembly electric tool, and a railway electric tool, such as an electric drill, an electric grinder, an electric wrench, an electric a screwdriver, an electric hammer, an impact drill, a concrete vibrator, and an electric planer. The electrical apparatus is not specially limited in the embodiments of the present application.

In the following embodiments, for the convenience of description, the electrical apparatus being a vehicle is taken as an example for illustration.

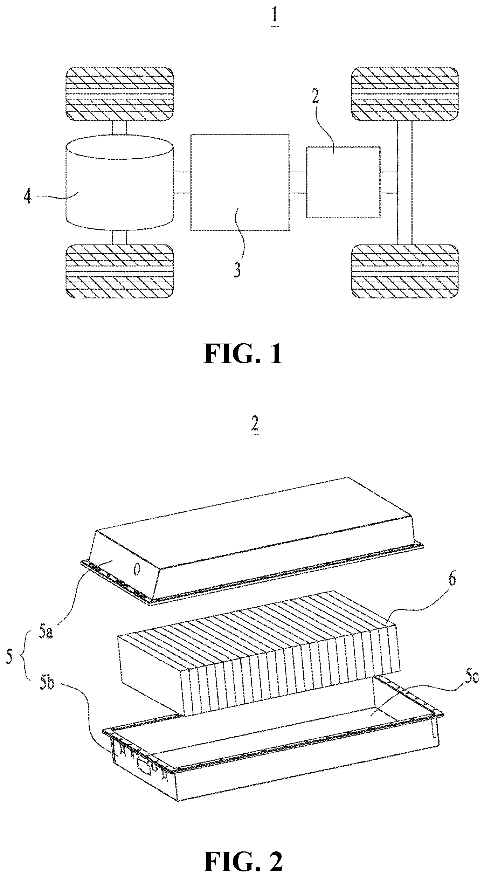

Fig. 1 is a schematic structural diagram of a vehicle according to some embodiments of the present application.

As shown in Fig. 1, the interior of the vehicle 1 is provided with a battery 2, and the battery 2 may be arranged at the bottom or head or tail of the vehicle 1. The battery 2 may be used to power the vehicle 1. For example, the battery 2 may be used as an operating power source of the vehicle 1.

The vehicle 1 may further include a controller 3 and a motor 4. The controller 3 is used to control the battery 2 to power the motor 4, for example, for meeting operating power requirements when the vehicle 1 is starting, navigating, and driving.

In some embodiments of the present application, the battery 2 can not only be used as the operating power source of the vehicle 1, but also be used as a driving power source of the vehicle 1 to replace or partially replace fuel or natural gas to provide driving power for the vehicle 1.

FIG. 2 is an exploded schematic diagram of a battery provided by some embodiments of the present application.

As shown in FIG. 2, the battery 2 includes a box 5 and a battery cell 6; and the battery cell 6 is accommodated within the box 5.

The box is 5 configured to accommodate the battery 6 and may be in various structural forms. In some embodiments, the box 5 may include a first box part 5a and a second box part 5b; the first box part 5a and the second box part 5b are mutually covered; the first box part 5a and the second box part 5b jointly define an accommodating space 5c used for accommodating the battery cell 6. The second box part 5b may be of a hollow structure with an opening formed in one end; the first box part 5a is of a plate-shaped structure, and the first box part 5a covers the opening side of the second box part 5b to form the box 5 with the accommodating space 5c; each of the first box part 5a and the second box part 5b may also be of a hollow structure with an opening formed in one side; and the opening side of the first box part 5a covers the opening side of the second box part 5b to form the box 5 with the accommodating space 5c. Definitely, the first box part 5a and the second box part 5b may be in various shapes, such as cylinders and cuboids.

In order to improve the sealing performance after the first box part 5a and the second box part 5b are connected, a sealing member such as a sealant and a sealing ring may also be arranged between the first box part 5a and the second box part 5b.

It is assumed that the first box part 5a covers the top of the second box part 5b, the first box part 5a can also be called as an upper box cover, and the second box part 5b can also be called as a lower box.

In the battery 2, one or a plurality of battery cells 6 can be arranged. If a plurality of battery cells 6 are arranged, the plurality of battery cells 6 can be connected in series or in parallel or in series-parallel connection; and series-parallel connection refers to that the plurality of battery cells 6 are connected in series and in parallel. The plurality of battery cells 6 can be directly connected in series or in parallel or in series-parallel connection, and then the whole body formed by the plurality of battery cells 6 is accommodated in the box 5; definitely, the plurality of battery cells 6 can be connected in series or in parallel or in series-parallel connection to form the battery module; and a plurality of batteries modules are connected in series or in parallel or in series-parallel connection as a whole and are accommodated in the box 5.

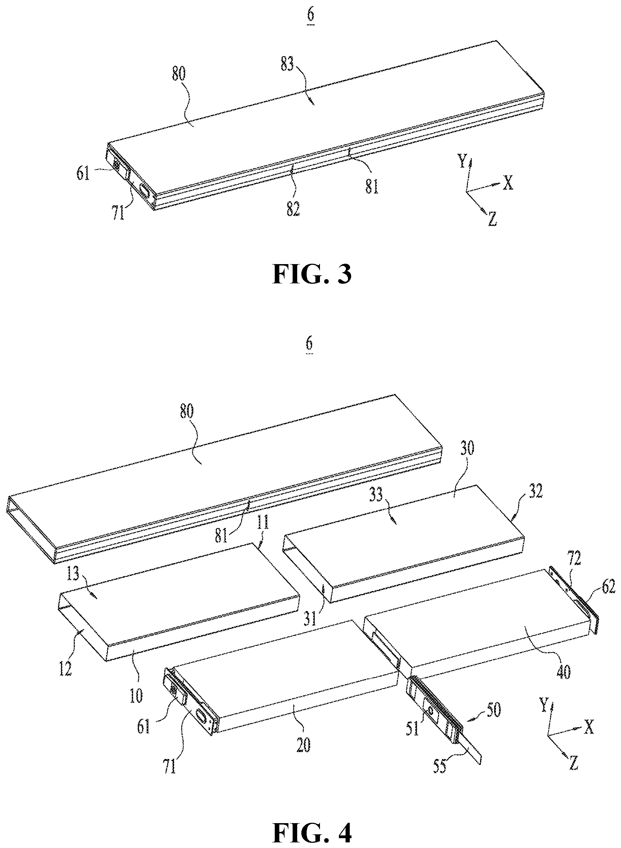

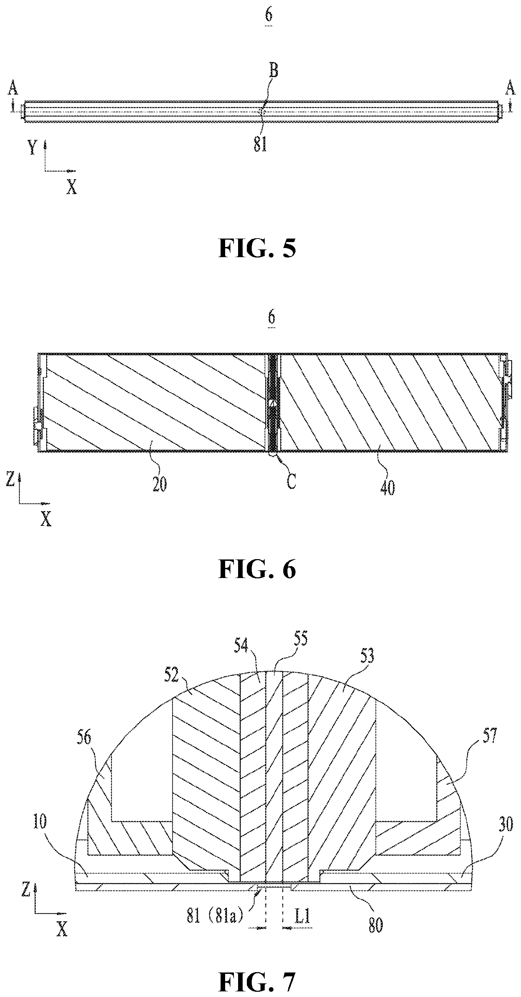

FIG. 3 is a three-dimensional structural schematic diagram of a battery cell provided by some embodiments of the present application; FIG. 4 is an exploded schematic diagram of a battery cell shown in FIG. 3; FIG. 5 is a side-view schematic diagram of a battery cell shown in FIG. 3; FIG. 6 is a cross-sectional schematic diagram of a battery cell along a line A-A shown in FIG. 5; and FIG. 7 is an enlarged schematic diagram of a round frame C in FIG. 6.

As shown in FIG. 3 to FIG. 7, the battery cell 6 in some embodiments of the present application includes a first case 10, a first electrode assembly 20, a second case 30, a second electrode assembly 40 and an end cover assembly 50. The first case 10 is provided with a first opening 11. The first electrode assembly 20 is accommodated within the first case 10. The second case 30 is provided with a second opening 31 opposite the first opening 11. The second electrode assembly 40 is accommodated within the second case 30. The end cover assembly 50 is configured to cover the first opening 11 and the second opening 31, the end cover assembly 50 includes a connecting assembly 51, and the connecting assembly 51 is configured to electrically connect the first electrode assembly 20 and the second electrode assembly 40.

The electrode assembly (such as the first electrode assembly 20 and the second electrode assembly 40) includes a positive electrode plate and a negative electrode plate. Exemplarily, the electrode assembly generates electric energy through oxidation and reduction reactions of ions when the ions are embedded into/removed from the positive electrode plate and the negative electrode plate. Alternatively, the electrode assembly further includes a separation film which is configured to insulate and separate the positive electrode plate from the negative electrode plate.

The electrode assembly can be a wound electrode assembly, a laminated electrode assembly or other types of electrode assemblies. Exemplarily, the positive electrode plate, the separation film and the negative electrode plate of the electrode assembly are wound to form a wound structure.

There may be one or more first electrode assemblies 20, which is not limited in the embodiment. Exemplarily, a plurality of first electrode assemblies 20 are provided, and the plurality of first electrode assemblies 20 are arranged in a laminated manner.

There may be one or more second electrode assemblies 40, which is not limited in the embodiment.

The first electrode assembly 20 and the second electrode assembly 40 can be of the same or different structures. In some examples, the first electrode assembly 20 can be a wound electrode assembly, and the second electrode assembly 40 can be a laminated electrode assembly. In other examples, the first electrode assembly 20 and the second electrode assembly 40 are both laminated electrode assemblies or wound electrode assemblies.

The first electrode assembly 20 and the second electrode assembly 40 can have the same or different sizes. Exemplarily, in the arrangement direction of the first electrode assembly 20 and the second electrode assembly 40, the size of the first electrode assembly 20 is equal to that of the second electrode assembly 40.

The case (such as the first case 10 and the second case 30) can be in various shapes and various sizes, such as a cuboid shape, a cylinder shape, and a hexagonal prism shape. There may be many kinds of materials of the case, such as copper, iron, aluminum, stainless steel, aluminum alloy, and plastic, which is not specifically limited in the present application.

The shape of the first case 10 can be determined according to the specific formation and size of the first electrode assembly 20. For example, if the first electrode assembly 20 is of a cylindrical structure, a cylindrical case can be selected; and if the first electrode assembly 20 is of a cuboid structure, a cuboid case can be selected.

The shape of the second case 30 can be determined according to the specific formation and size of the second electrode assembly 40.

The first case 10 can be of a structure with an opening in one side and can also be of a structure with openings in two sides. In some examples, the first case 10 forms a first opening 11 only in the side facing the second case 30. In other examples, the first case 10 forms the first opening 11 in the side facing the second case 30 and forms a third opening 12 in the side facing away from the second case 30.

The second case 30 can be of a structure with an opening in one side and can also be of a structure with openings in two sides. In some examples, the second case 30 forms a second opening 31 only in the side facing the first case 10. In other examples, the second case 30 forms the second opening 31 in the side facing the first case 10 and forms a fourth opening 32 in the side facing away from the first case 10.

The first case 10 is provided with a first accommodating cavity for accommodating the first electrode assembly 20, and the second case 30 is provided with a second accommodating cavity for accommodating the second electrode assembly 40. The end cover assembly 50 can separate the first accommodating cavity of the first case 10 from the second accommodating cavity of the second case 30. Alternatively, the end cover assembly 50 can also be provided with a channel for communicating the first accommodating cavity with the second accommodating cavity.

The connecting assembly 51 can connect the first electrode assembly 20 and the second electrode assembly 40 in series, and can also connect the first electrode assembly 20 and the second electrode assembly 40 in parallel.

In the arrangement direction of the first case 10 and the second case 30, the first case 10 and the second case 30 can be spaced apart by a certain distance and can also directly abut against each other, which is not limited in the embodiments of the present application.

The first case 10 and the second case 30, which are sequentially arranged, can increase the overall size of the battery cell 6, thereby increasing the space utilization of the battery cell 6 in the battery, and improving the energy density. The first electrode assembly 20 and the second electrode assembly 40 are respectively accommodated within the first case 10 and the second case 30, thus the size of a single electrode assembly and the size of a single case can be reduced, the molding process of the case and the electrode assembly is simplified, the internal resistance of the electrode assembly and the difficulty of the electrolyte infiltrating into the electrode assembly are reduced, the cycle performance of the battery cell 6 is improved, and the service life of the battery cell is prolonged. The end cover assembly 50 can cover the first opening 11 and the second opening 31 at the same time and realize the sealing of the battery cell 6, so that the structure of the battery cell 6 is simplified. The connecting assembly 51 can electrically connect the first electrode assembly 20 and the second electrode assembly 40 to realize the convergence and output of current, and the structure of the battery cell 6 is simplified.

In some embodiments, the battery cell 6 further includes a first electrode terminal 61 and a second electrode terminal 62 which are opposite in polarity.

The first electrode terminal 61 and the second electrode terminal 62 are configured to electrically connect the first electrode assembly 20 and the second electrode assembly 40 to the external circuit, thereby realizing the charging and discharging of the electrode assembly.

The first electrode terminal 61 can be arranged on the first case 10 and can also be arranged at other positions of the battery cell 6. The second electrode terminal 62 can be arranged on the second case 30 and can also be arranged at other positions of the battery cell 6.

In some embodiments, the first electrode terminal 61 is electrically connected to the first electrode assembly 20, and the second electrode terminal 62 is electrically connected to the second electrode assembly 40.

In some embodiments, the first electrode assembly 20 and the second electrode assembly 40 are connected in series. The first electrode assembly 20 includes a first positive tab and a first negative tab, and the second electrode assembly 40 includes a second positive tab and a second negative tab.

In some examples, the first negative tab is electrically connected to the second positive tab through the connecting assembly 51, the first electrode terminal 61 is electrically connected to the first positive tab, and the second electrode terminal 62 is electrically connected to the second negative tab. In other examples, the first positive tab is electrically connected to the second negative tab through the connecting assembly 51, the first electrode terminal 61 is electrically connected to the first negative tab, and the second electrode terminal 62 is electrically connected to the second positive tab.

In some embodiments, the battery cell 6 further includes the first electrode terminal 61 and the second electrode terminal 62, the first electrode terminal 61 is located on the side of the first electrode assembly 20 facing away from the first opening 11 and is electrically connected to the first electrode assembly 20, and the second electrode terminal 62 is located on the side of the second electrode assembly 40 facing away from the second opening 31 and is electrically connected to the second electrode assembly 40.

The first electrode terminal 61 and the second electrode terminal 62 are respectively arranged at two opposite ends of the battery cell 6, so that series-parallel connection among a plurality of battery cells 6 is realized.

In some embodiments, the first case 10 is provided with a third opening 12 in the end facing away from the first opening 11. The battery cell 6 further includes a first cover plate 71 for covering the third opening 12. In some embodiments, the first electrode terminal 61 is arranged on the first cover plate 71.

In some embodiments, the second case 30 is provided with a fourth opening 32 in the end facing away from the second opening 31, and the battery cell 6 further includes a second cover plate 72 for covering the fourth opening 32. In some embodiments, the second electrode terminal 62 is arranged on the second cover plate 72.

In some embodiments, the battery cell 6 further includes an insulating component 80, and the insulating component 80 clads at least part of the first case 10 and at least part of the second case 30.

The insulating component 80 can clad an exposed surface of the first case 10. The insulating component 80 can completely clad the exposed surface of the first case 10, and can also only include a part of the exposed surface of the first case 10.

The insulating component 80 can clad the exposed surface of the second case 30. The insulating component 80 can completely clad the exposed surface of the second case 30, and can also only include a part of the exposed surface of the second case 30.

The insulating component 80 can protect the first case 10 and the second case 30 from the outer side, so that the insulativity of the battery cell 6 is improved, and the risk of short circuit is reduced.

In some embodiments, the insulating component 80 completely covers an outer peripheral surface 13 of the first case 10 and an outer peripheral surface 33 of the second case 30.

Exemplarily, the outer peripheral surface 13 of the first case 10 can be an outer surface of the first case 10, which is parallel to the axial direction of the first opening 11 and surrounds the first opening 11 all around. The outer peripheral surface 33 of the second case 30 can be an outer surface of the second case 30, which is parallel to the axial direction of the second opening 31 and surrounds the second opening 31 all around.

The insulating component 80 completely covers the outer peripheral surface 13 of the first case 10 and the outer peripheral surface 33 of the second case 30 to reduce the exposed area of the first case 10 and the exposed area of the second case 30, thereby reducing the risk that the first case 10 is conducted with other electrified parts and the risk that the second case 30 is conducted with other conductive members, and improving the safety.

In some embodiments, the insulating component 80 is adhered to the outer peripheral surface 13 of the first case 10 and the outer peripheral surface 33 of the second case 30.

In some embodiments, at least part of the end cover assembly 50 is located between the first opening 11 and the second opening 31. A part of the insulating component 80 surrounds the outer side of the part, located between the first opening 11 and the second opening 31, of the end cover assembly 50.

The at least part, located between the first opening 11 and the second opening 31, of the end cover assembly 50 indicates that the at least part, located between a plane with the first opening 11 and a plane with the second opening 31, of the end cover assembly 50.

The end cover assembly 50 can be only partially located between the first opening 11 and the second opening 31, and can also be integrally located between the first opening 11 and the second opening 31.

The insulating component 80 can completely surround the part, located between the first opening 11 and the second opening 31, of the end cover assembly 50 from the outer side, and can also partially surround the part, located between the first opening 11 and the second opening 31, of the end cover assembly 50 from the outer side.

The insulating component 80 can shield the part, located between the first opening 11 and the second opening 31, of the end cover assembly 50, so as to reduce the risk of conduction between the end cover assembly 50 and an electrified component thereof and improve the safety.

In some embodiments, the end cover assembly 50 includes a first end cover 52 and a second end cover 53, the first end cover 52 is configured to cover the first opening 11, and the second end cover 53 is located on the side of the first end cover 52 facing the second case 30 and is configured to cover the second opening 31. The connecting assembly 51 connects the first end cover 52 and the second end cover 53.

The connecting assembly 51 can be insulated from the first end cover 52 and can also be electrically connected to the first end cover 52. The connecting assembly 51 can be insulated from the second end cover 53 and can also be electrically connected to the second end cover 53.

The first end cover 52 and the second end cover 53 are connected to the first case 10 and the second case 30 respectively, thus the installation difficulty of the end cover assembly 50 on the first case 10 and the second case 30 can be reduced, the stability of the end cover assembly 50 can be improved, and the sealing performance of the battery cell 6 can be improved. The first end cover 52 and the second end cover 53 can fix the connecting assembly 51, so that the shaking of the connecting assembly 51 is reduced when the battery cell 6 vibrates, the risk of connection failure between the connecting assembly 51 and the first electrode assembly 20 and the risk of connection failure between the connecting assembly 51 and the second electrode assembly 40 are reduced, and the reliability of the battery cell 6 is improved.

In some embodiments, the first end cover 52 is welded to the first case 10.

In some embodiments, the second end cover 53 is welded to the second case 30.

In some embodiments, the insulating component 80 surrounds the part, located between the first case 10 and the second case 30, of the first end cover 52 and the part, located between the first case 10 and the second case 30, of the second end cover 53 from the outer periphery.

The part, located between the first case 10 and the second case 30, of the first end cover 52 can be understood as: a part, located between the plane with the first opening 11 and the plane with the second opening 31, of the first end cover 52. The part, located between the first case 10 and the second case 30, of the second end cover 53 can be understood as: a part, located between the plane with the first opening 11 and the plane with the second opening 31, of the second end cover 53.

The insulating component 80 can shield the first end cover 52 and the second end cover 53, so that exposure of the first end cover 52 and exposure of the second end cover 53 are reduced, the risk of short circuit is reduced, and the safety is improved.

In some embodiments, the insulating component 80 is attached to the part, located between the first case 10 and the second case 30, of the first end cover 52 and the part, located between the first case 10 and the second case 30, of the second end cover 53.

The attachment refers to attaching and connecting. Exemplarily, the insulating component 80 is adhered to the first end cover 52 and the second end cover 53.

The insulating component 80 is attached to the first end cover 52 and the second end cover 53, so that the risk of deformation and deviation of the insulating component 80 is reduced when the battery cell 6 is subjected to external impact, the insulating component 80 can effectively shield the first end cover 52 and the second end cover 53, the risk of short circuit is reduced, and the safety is improved.

In some embodiments, the end cover assembly 50 further includes an insulating plate 54, and the insulating plate 54 is arranged between the first end cover 52 and the second end cover 53. The insulating component 80 surrounds at least part of the insulating plate 54 from the outer periphery.

The insulating plate 54 can insulate and isolate the first end cover 52 from the second end cover 53 to reduce the risk of short circuit and improve the safety. The insulating component 80 can be matched with the insulating plate 54 to shield the first end cover 52 and the second end cover 53, thus reducing the exposure of the first end cover 52 and the second end cover 53.

In some embodiments, the insulating plate 54 can be a plastic plate.

In some embodiments, the insulating component 80 is attached to the peripheral surface of the insulating plate 54. Optionally, the insulating component 80 is adhered to the insulating plate 54.

The insulating component 80 is attached to the peripheral surface of the insulating plate 54 to reduce the risk of deformation and deviation of the insulating component 80 when thee battery cell 6 is subjected to external impact, thus reducing the risk of exposing the first end cover 52 and the second end cover 53 and improving the safety.

The part, attached to the peripheral surface of the insulating plate 54, of the insulating component 80 surrounds the insulating plate 54 all around. The insulating component 80 can play a sealing role to reduce the risk of penetration of external impurities from the space between the insulating plate 54 and the insulating component 80, reduce impurities falling onto the first end cover 52 and impurities falling onto the second end cover 53, and reduce the risk of corrosion of the first end cover 52 and the second end cover 53, thus improving the safety.

In some embodiments, the first case 10 and the second case 30 are arranged in the first direction X. The first opening 11 and the second opening 31 are opposite to each other in the first direction X. Exemplarily, the axial direction of the first opening 11 is parallel to the first direction X, and the axial direction of the second opening 31 is parallel to the first direction X.

In some embodiments, the end cover assembly 50 further includes a conductive member 55 electrically connected to the connecting assembly 51, and at least part of the conductive member 55 is located between the first opening 11 and the second opening 31. The insulating component 80 is provided with an avoidance structure 81, and the avoidance structure 81 is configured to expose at least part of the conductive member 55.

The conductive member 55 is electrically connected to the first electrode assembly 20 and the second electrode assembly 40 through the connecting assembly 51.

The part, located between the first case 10 and the second case 30, of the conductive member 55 can be understood as: a part, located between the plane with the first opening 11 and the plane with the second opening 31, of the conductive member 55. The conductive member 55 can be integrally located between the first opening 11 and the second opening 31, and can also be partially located between the first opening 11 and the second opening 31.

The avoidance structure 81 is configured to avoid at least part of the conductive member 55, and can include a hole, a gap or other structures penetrating through the insulating component 80.

The avoidance structure 81 can expose at least part of the conductive member 55, so that other components can pass through the insulating component 80 and be electrically connected to the conductive member 55, and then the potential of the connecting assembly 51 can be detected.

In some embodiments, the voltage of the first electrode assembly 20 and the voltage of the second electrode assembly 40 can be detected through the conductive member 55.

Exemplarily, a voltage detection device can be electrically connected to the conductive member 55 and the first electrode terminal 61 through probes respectively so as to detect the voltage of the first electrode assembly 20. The avoidance structure 81 can avoid the probes, thus providing a channel for the probes to pass through the insulating component 80.

Exemplarily, the voltage detection device can be electrically connected to the conductive member 55 and the second electrode terminal 62 through the probes respectively so as to detect the voltage of the second electrode assembly 40. The avoidance structure 81 can avoid the probes, thus providing a channel for the probes to pass through the insulating component 80.

In some embodiments, the first case 10 and the second case 30 are arranged in the first direction X. The size of a part, exposed through the avoidance structure 81, of the conductive member 55 in the first direction X is L1, L1≥0.01mm.

When observed in a direction vertical to the first direction X and in which the conductive member 55 can be observed through the avoidance structure 81, the minimum size of the conductive member 55 in the first direction X can be recorded as L1.

In some embodiments of the present application, L1 is greater than or equal to 0.01 mm, so that the contact size of the probe passing through the avoidance structure 81 and the conductive member 55 in the first direction X meets the detection requirement.

In some embodiments, the avoidance structure 81 includes an avoidance hole 81a. In the axial direction Z of the avoidance hole 81a, the avoidance hole 81a is opposite to the conductive member 55 so as to expose at least part of the conductive member 55.

One or a plurality of avoidance hole 81a can be provided. In some examples, a plurality of the avoidance holes 81a can be provided; and the plurality of avoidance holes 81a can be distributed on the same side of an end cover assembly 50 and can also be distributed on the two opposite sides of the end cover assembly 50.

In the axial direction Z of the avoidance hole 81a, the projection of the avoidance hole 81a is at least partially overlapped with the projection of the conductive member 55. At least part of the conductive member 55 can be observed from the outer side of the insulating component 80 along the axial direction Z of the avoidance hole 81a.

The avoidance hole 81a can expose at least part of the conductive member 55, so that other components can pass through the insulating component 80 and be electrically connected to the conductive member 55, and then the potential of a connecting assembly 51 can be detected. The avoidance hole 81a is simple in molding mode and small in size, and the risk of insulation failure can be effectively reduced.

In some embodiments, when observed from the outer side of the insulating component 80 along the axial direction Z of the avoidance hole 81a, the size of the part, exposed through the avoidance hole 81a, of the conductive member 55 along the first direction X is greater than or equal to 0.01 mm.

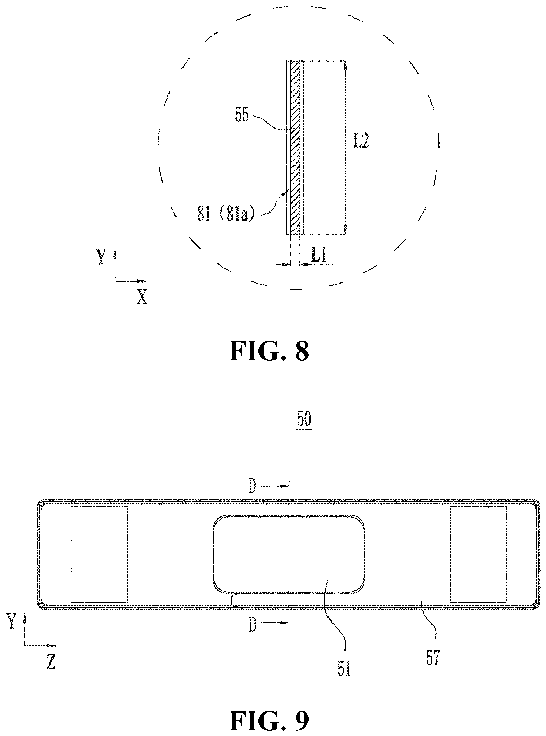

FIG. 8 is an enlarged schematic diagram of a battery cell at a round frame B shown in FIG. 5.

With reference to FIG. 5 to FIG. 8, in some embodiments, the size of the part, exposed through the avoidance hole 81a, of the conductive member 55 along the second direction Y is L2, L2≥0.01mm. The first direction X, the second direction Y and the axial direction Z are perpendicular to each other.

Exemplarily, when observed from the outside of the insulating component 80 along the axial direction Z of the avoidance hole 81a, the minimum size of the part, exposed through the avoidance hole 81a, of the conductive member 55 along the second direction Y can be recorded as L2.

In some embodiments of the present application, L2 is greater than or equal to 0.01 mm, so that the contact size of the probe passing through the avoidance hole 81a and the conductive member 55 in the second direction Y meets the detection requirements.

In some embodiments, the size of the battery cell 6 along the axial direction Z is greater than the size of the battery cell 6 along the second direction Y.

In the battery, a plurality of battery cells 6 can be arranged along the second direction Y. The avoidance hole 81a is arranged in the side of the battery cell 6 in the axial direction Z, which can reduce the risk that the avoidance hole 81a of a certain battery cell 6 is shielded by an adjacent battery cell 6.

In some embodiments, the outer surface of the insulating component 80 includes two first surfaces 82 arranged opposite to each other along the axial direction Z, and two second surfaces 83 arranged opposite to each other along the second direction Y; and each second surface 83 is connected to the two first surfaces 82 The area of the first surface 82 is smaller than that of the second surface 83. The avoidance hole 81a is arranged in the first surface 82 with smaller area.

At least one first surface 82 is provided with the avoidance hole 81a. Optionally, the two first surfaces 82 are provided with the avoidance holes 81a.

Each first surface 82 can be provided with one avoidance hole 81a or a plurality of avoidance holes 81a.

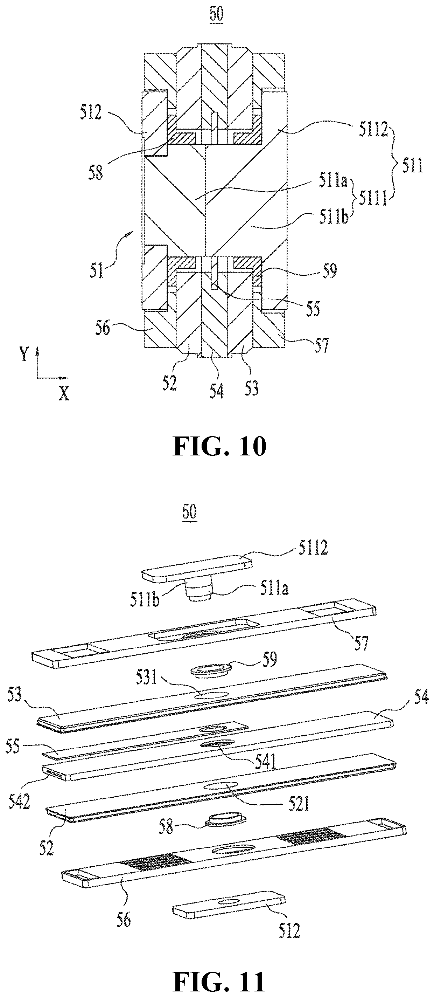

FIG. 9 is an overlook schematic diagram of an end cover assembly of a battery cell provided by some embodiments of the present application; FIG. 10 is a cross-sectional schematic diagram of a line D-D in FIG. 9; and FIG. 11 is an exploded schematic diagram of an end cover assembly shown in FIG. 9.

With reference to FIG. 7 to FIG. 11, in some embodiments, the connecting assembly 51 includes a terminal post 511 and a connecting plate 512; the terminal post 511 includes a terminal post main body 5111 and a flange 5112 arranged around the terminal post main body 5111; the terminal post main body 5111 passes through the first end cover 52, the insulating plate 54 and the second end cover 53; the flange 5112 is located on the side of the second end cover 53 facing away from the first end cover 52; the connecting plate 512 is located on the side of the first end cover 52 facing away from the second end cover 53; and the connecting plate 512 is fixed to the terminal post main body 5111.

The connecting plate 512 and the flange 5112 clamp the first end cover 52, the second end cover 53 and the insulating plate 54 from two sides so as to fix the first end cover 52, the second end cover 53 and the insulating plate 54.

In some embodiments, the terminal post main body 5111 is riveted to the connecting plate 512.

In some embodiments, the terminal post main body 5111 includes a first section 511a and a second section 511b which are arranged in the first direction X, the first section 511a is connected to the connecting plate 512, and the second section 511b is connected to the flange 5112. Exemplarily, the second section 511b and the flange 5112 are integrally formed.

In some embodiments, the base metal of the first section 511a is different from the base metal of the second section 511b. The base metal of the first section 511a is a main component in the material component of the first section 511a, and the base metal of the second section 511b is a main component in the material component of the second section 511b.

In some embodiments, one of the base metal of the first section 511a and the base metal of the second section 511b is copper, and the other one is aluminum.

In some embodiments, the first section 511a is connected to the second section 511b through a composite process.

In some embodiments, the end cover assembly 50 further includes a first insulation member 56 for insulating and isolating the first end cover 52 from the connecting plate 512. Exemplarily, at least part of the first insulation member 56 is clamped between the first end cover 52 and the connecting plate 512.

In some embodiments, the end cover assembly 50 further includes a second insulation member 57 for insulating and isolating the second end cover 53 from the flange 5112. Exemplarily, at least part of the second insulation member 57 is clamped between the second end cover 53 and the flange 5112.

In some embodiments, the first end cover 52 includes a first through hole 521, the second end cover 53 includes a second through hole 531, and the insulating plate 54 includes a third through hole 541. The terminal post main body 5111 sequentially passes through the second through hole 531, the third through hole 541 and the first through hole 521.

In some embodiments, the end cover assembly 50 further includes a first sealing ring 58 for sealing the first through hole 521. Exemplarily, at least part of the first sealing ring 58 is clamped between the connecting plate 512 and the first end cover 52 to seal the first through hole 521.

In some embodiments, at least part of the first sealing ring 58 is accommodated within the first through hole 521 to insulate and isolate the hole wall of the first through hole 521 from the terminal post main body 5111.

In some embodiments, the end cover assembly 50 further includes a second sealing ring 59 for sealing the second through hole 531. Exemplarily, at least part of the second sealing ring 59 is clamped between the flange 5112 and the second end cover 53 to seal the second through hole 531.

In some embodiments, at least part of the second sealing ring 59 is accommodated within the second through hole 531 to insulate and isolate the hole wall of the second through hole 531 from the terminal post main body 5111.

In some embodiments, the insulating plate 54 clads at least part of the conductive member 55 to insulate and isolate the conductive member 55 from the first end cover 52 and the second end cover 53.

In some embodiments, the insulating plate 54 is provided with a channel 542, and at least part of the conductive member 55 is embedded into the channel 542. The channel 542 exposes at least one end of the conductive member 55, so that the conductive member 55 is connected to the probe.

In some embodiments, the end of the conductive member 55 close to the avoidance hole 81a is flush with the end of the insulating plate 54 close to the avoidance hole 81a. In other embodiments, the end of the conductive member 55 close to the avoidance hole 81a can be recessed into the channel 542 of the insulating plate 54.

In some embodiments, the channel 542 is in communication with the third through hole 541. At least part of the conductive member 55 is accommodated within the third through hole 541 and is electrically connected to the terminal post main body 5111.

The conductive member 55 can be connected to the terminal post main body 5111 by welding, bonding, clamping or other ways.

In some embodiments, the conductive member 55 is provided with a mounting hole, and the terminal post main body 5111 passes through the mounting hole and is in interference fit with the mounting hole to realize clamping of the terminal post main body 5111 and the conductive member 55.

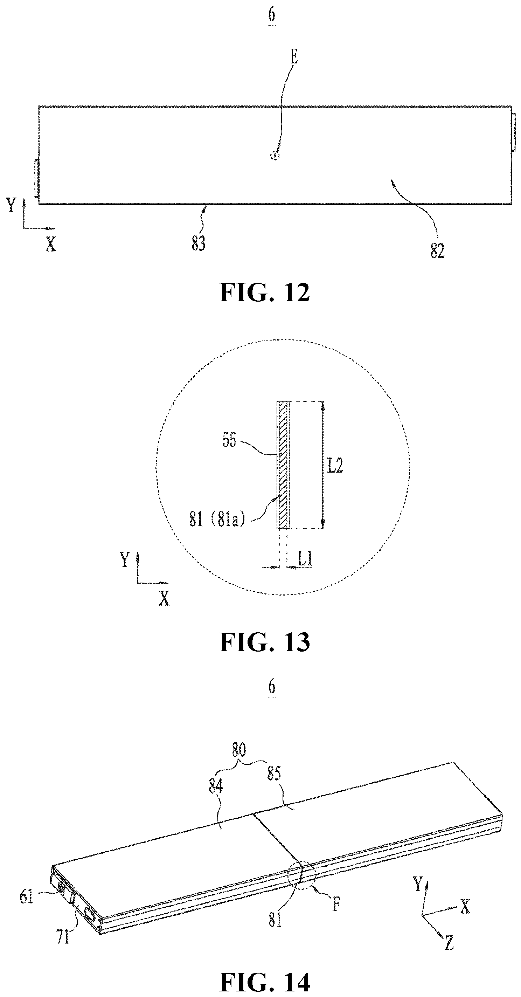

FIG. 12 is a front-view schematic diagram of a battery cell provided by some other embodiments of the present application; and FIG. 13 is an enlarged schematic diagram of a round frame E in FIG. 12

As shown in FIG. 12 and FIG. 13, in some embodiments, the size of the battery cell 6 along the axial direction Z of the avoidance hole 81a is smaller than the size of the battery cell 6 along the second direction Y.

In some embodiments, the outer surface of the insulating component 80 includes two first surfaces 82 arranged opposite to each other along the axial direction Z, and two second surfaces 83 arranged opposite to each other along the second direction Y; and each second surface 83 is connected to the two first surfaces 82 The area of the first surfaces 82 is larger than that of the second surfaces 83. The avoidance hole 81a can also be formed in the first surface 82 with larger area.

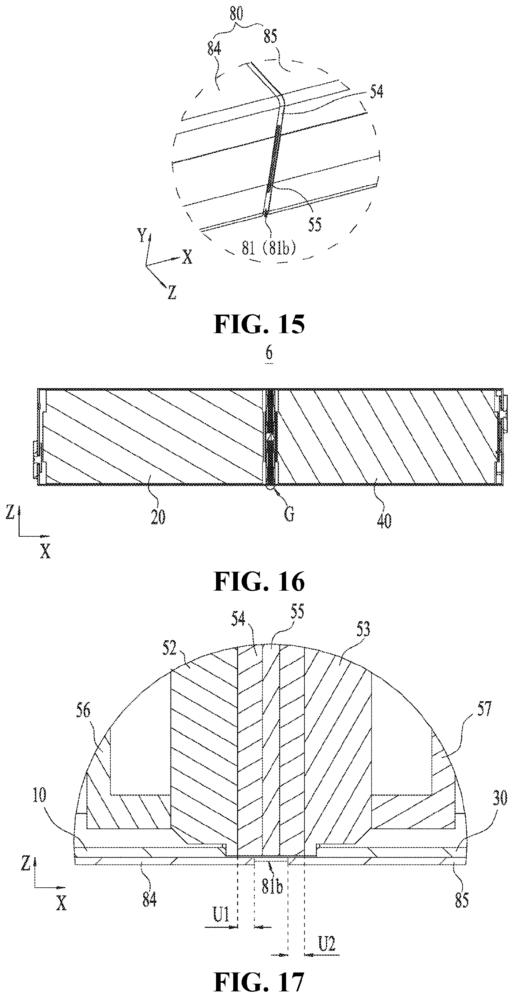

FIG. 14 is a three-dimensional structural schematic diagram of a battery cell provided by some other embodiments of the present application; FIG. 15 is an enlarged schematic diagram of a round frame F in FIG. 14; FIG. 16 is a section-view schematic diagram of a battery cell shown in FIG. 14; and FIG. 17 is an enlarged schematic representation of a round frame G in FIG. 16.

As shown in FIG. 14 to FIG. 17, in some embodiments, the first case 10 and the second case 30 are arranged along the first direction X. The insulating component 80 includes the first insulating part 84 and the second insulating part 85 which are arranged at an interval along the first direction X, the first insulating part 84 is connected to the first case 10, and the second insulating part 85 is connected to the second case 30. The end of the first insulating part 84 close to the second insulating part 85 exceeds the first end cover 52 along the first direction X and is connected to the insulating plate 54, and the end of the second insulating part 85 close to the first insulating part 84 exceeds the second end cover 53 along the first direction X and is connected to the insulating plate 54.

The first insulating part 84 covers the first end cover 52 from the outer side so as to reduce the risk of exposing the first end cover 52; and the second insulating part 85 covers the second end cover 53 from the outer side so as to reduce the risk of exposing the second end cover 53. The first insulating part 84 and the second insulating part 85 are both connected to the insulating plate 54, so that the deviation of the first insulating part 84 and the second insulating part 85 is reduced when the battery cell 6 is subjected to external impact, the risk of exposing the first end cover 52 and the risk of exposing the second end cover 53 are reduced, and the safety is improved. The first insulating part 84 and the second insulating part 85 are separately arranged so as to reduce the interference in the assembling process.

In some embodiments, the first insulating part 84 completely clads the outer peripheral surface 13 of the first case 10, and the second insulating part 85 completely clads the outer peripheral surface 33 of the second case 30.

In some embodiments, the first insulating part 84 is adhered to the outer peripheral surface of the insulating plate 54, and the adhesive surface between the first insulating part 84 and the insulating plate 54 surrounds the insulating plate 54 all around. The second insulating part 85 is adhered to the outer peripheral surface of the insulating plate 54, and the adhesive surface between the second insulating part 85 and the insulating plate 54 surrounds the insulating plate 54 all around.

In some embodiments, the end of the first insulating part 84 close to the second insulating part 85 exceeds the first end cover 52 in the first direction X by the size U1, U1≥0.01mm.

U1 is set to be greater than or equal to 0.01mm, so that the connection area between the first insulating part 84 and the insulating plate 54 can meet the requirement, and the risk of separation of the first insulating part 84 and the insulating plate 54 is reduced.

In some embodiments, the size of the end of the second insulating part 85 close to the first insulating part 84 exceeds the second end cover 53 in the first direction X by U2, U2≥0.01mm.

U2 is set to be greater than or equal to 0.01mm, so that the connection area between the second insulating part 85 and the insulating plate 54 can meet the requirement, and the risk of separation of the second insulating part 85 and the insulating plate 54 is reduced.

In some embodiments, the end of the first insulating part 84 close to the second insulating part 85 exceeds the first end cover 52 in the first direction X by the size U1, U1≥0.01mm. The size of the end of the second insulating part 85 close to the first insulating part 84 exceeds the second end cover 53 in the first direction X by U2, U2≥0.01mm.

In some embodiments, the end cover assembly 50 further includes the conductive member 55 electrically connected to the connecting assembly 51, and the insulating plate 54 clads at least part of the conductive member 55 so as to insulate and isolate the conductive member 55 from the first end cover 52 and the second end cover 53. The avoidance gap 81b is formed between the first insulating part 84 and the second insulating part 85 and is configured to expose at least part of the conductive member 55.

The avoidance gap 81b can expose at least part of the conductive member 55, so that other components can pass through the insulating component 80 and be electrically connected to the conductive member 55, and then the potential of the connecting assembly 51 can be detected.

In some embodiments, in the first direction X, the spacing from the first insulating part 84 to the second insulating part 85 is greater than or equal to 0.01 mm. In other words, the size of the avoidance gap 81b along the first direction X is greater than or equal to 0.01 mm.

In some embodiments, the avoidance structure 81 of the insulating component 80 includes the avoidance gap 81b. The avoidance gap 81b surrounds the end cover assembly 50 all around.

The avoidance gap 81b surrounds the end cover assembly 50 all around, so that the exposed position of the conductive member 55 can be flexibly arranged.

According to some embodiments of the present application, the present application further provides a battery which includes a plurality of battery cells in any abovementioned embodiment.

According to some embodiments of the present application, the present application further provides an electric apparatus which includes the battery cell in any abovementioned embodiment, and the battery cell is configured to provide electric energy for the electric apparatus. The electric apparatus can be any abovementioned device or system applying the battery cells.

With reference to FIG. 3 to FIG. 7, the battery cell 6 according to some embodiments of the present application includes the first case 10, the first electrode assembly 20, the second case 30, the second electrode assembly 40, the end cover assembly 50, the first cover plate 71, the second cover plate 72, the first electrode terminal 61, the second electrode terminal 62 and the insulating component 80. The first opening 11 and the third opening 12 are formed in the two ends of the first case 10 along the first direction X respectively; the second opening 31 and the fourth opening 32 are formed in the two ends of the second case 30 along the first direction X respectively; and the first opening 11 is opposite to the second opening 31. The first electrode assembly 20 is accommodated within the first case 10. The second electrode assembly 40 is accommodated within the second case 30. The end cover assembly 50 is configured to cover the first opening 11 and the second opening 31. The first cover plate 71 is configured to cover the third opening 12, and the second cover plate 72 is configured to cover the fourth opening 32.

The end cover assembly 50 includes the connecting assembly 51, and the connecting assembly 51 is configured to connect the first electrode assembly 20 to the second electrode assembly 40 in series. The first electrode terminal 61 is arranged on the first cover plate 71 and is electrically connected to the first electrode assembly 20; and the second electrode terminal 62 is arranged on the second cover plate 72 and is electrically connected to the second electrode assembly 40.

The insulating component 80 clads at least one part of the first case 10 and at least one part of the second case 30.

It is to be noted that, without conflict, the embodiments in the present application and the features in the embodiments may be combined with each other.

Finally, it should be noted that, the above embodiments are merely used for describing the technical solution of the present application, instead of limiting the present application; although the present application is described in detail with reference to the foregoing embodiments, persons of ordinary skill in the art should understand that they can still make modifications on the technical solution recorded in the above embodiments, or perform equivalent replacements on a part of technical features thereof; these modifications or replacements are not intended to make the essences of the corresponding technical solutions depart from the spirit and scope of the technical solutions of the embodiments of the present application.

## Claims

1. A battery cell, comprising:
a first case which is provided with a first opening;
a first electrode assembly which is accommodated within the first case;
a second case which is provided with a second opening opposite the first opening;
a second electrode assembly which is accommodated within the second case; and
an end cover assembly which is configured to cover the first opening and the second opening, the end cover assembly comprising a connecting assembly, wherein the connecting assembly is configured to electrically connect the first electrode assembly and the second electrode assembly.

2. The battery cell according to claim **1,** further comprising an insulating component, wherein the insulating component clads at least part of the first case and at least part of the second case.

3. The battery cell according to claim 2, wherein the insulating component completely covers an outer peripheral surface of the first case and an outer peripheral surface of the second case.

4. The battery cell according to claim 2 or 3, wherein at least part of the end cover assembly is located between the first opening and the second opening; and
a part of the insulating component surrounds the outer side of the part, located between the first opening and the second opening, of the end cover assembly.

5. The battery cell according to claim 4, wherein the end cover assembly comprises a first end cover and a second end cover, the first end cover is configured to cover the first opening, and the second end cover is located on the side of the first end cover facing the second case and is configured to cover the second opening; and
the connecting assembly connects the first end cover and the second end cover.

6. The battery cell according to claim 5, wherein the insulating component surrounds the part, located between the first case and the second case, of the first end cover and the part, located between the first case and the second case, of the second end cover from the outer periphery.

7. The battery cell according to claim 6, wherein the insulating component is attached to the part, located between the first case and the second case, of the first end cover and the part, located between the first case and the second case, of the second end cover.

8. The battery cell according to any one of claims 5 to 7, wherein the end cover assembly further comprises an insulating plate, and the insulating plate is arranged between the first end cover and the second end cover; and
the insulating component surrounds at least part of the insulating plate from the outer periphery.

9. The battery cell according to claim 8, wherein the insulating component is attached to the outer peripheral surface of the insulating plate.

10. The battery cell according to claim 8 or 9, wherein the first case and the second case are arranged in a first direction;
the insulating component comprises a first insulating part and a second insulating part which are arranged at an interval in the first direction, the first insulating part is connected to the first case, and the second insulating part is connected to the second case; and
the end of the first insulating part close to the second insulating part exceeds the first end cover in the first direction and is connected to the insulating plate, and the end of the second insulating part close to the first insulating part exceeds the second end cover in the first direction and is connected to the insulating plate.

11. The battery cell according to claim 10, wherein the end of the first insulating part close to the second insulating part exceeds the first end cover in the first direction by the size U1, U1≥0.01mm; and/or,
the end of the second insulating part close to the first insulating part exceeds the second end cover in the first direction by the size U2, U2≥0.01mm.

12. The battery cell according to claim 10 or 11, wherein the end cover assembly further comprises a conductive member electrically connected to the connecting assembly, and the insulating plate clads at least part of the conductive member so as to insulate and isolate the conductive member from the first end cover and the second end cover; and
an avoidance gap is formed between the first insulating part and the second insulating part and is configured to expose at least part of the conductive member.

13. The battery cell according to any one of claims 2 to 9, wherein the end cover assembly further comprises a conductive member electrically connected to the connecting assembly, and at least part of the conductive member is located between the first opening and the second opening; and
the insulating component is provided with an avoidance structure, and the avoidance structure is configured to expose at least part of the conductive member.

14. The battery cell according to claim 13, wherein the first case and the second case are arranged in a first direction; and
the size of the part, exposed through the avoidance structure, of the conductive member in the first direction is L1, L1≥0.01mm.

15. The battery cell according to claim 14, wherein the avoidance structure comprises an avoidance hole, and the avoidance hole is arranged opposite the conductive member in the axial direction of the avoidance hole, so that at least part of the conductive member is exposed.

16. The battery cell according to claim 15, wherein the size of the part, exposed through the avoidance hole, of the conductive member in a second direction is L2, L2≥0.01mm; and
the first direction, the second direction and the axial direction are perpendicular to each other.

17. The battery cell according to claim 16, wherein the size of the battery cell in the axial direction is greater than the size of the battery cell in the second direction.

18. The battery cell according to claim 13 or 14, wherein the avoidance structure comprises an avoidance gap, and the avoidance gap surrounds the end cover assembly all around.

19. The battery cell according to any one of claims 1 to 18, further comprising a first electrode terminal and a second electrode terminal, wherein the first electrode terminal is located on the side of the first electrode assembly facing away from the first opening and is electrically connected to the first electrode assembly, and the second electrode terminal is located on the side of the second electrode assembly facing away from the second opening and is electrically connected to the second electrode assembly.

20. A battery, comprising a plurality of battery cells according to any one of claims 1 to 19.

21. An electric apparatus, comprising the battery cell according to any one of claims 1 to 19, wherein the battery cell is configured to provide electric energy.
